# EUROPEAN PATENT SPECIFICATION

(11) **EP 3 459 819 B1**
(45) Date of publication and mention of the grant of the patent: **14.08.2019**
(21) Application number: 18181489.8
(22) Date of filing: 03.07.2018
(51) Int. Cl.: B62D 1/10, B62D 1/183

(54) **A STEERING ASSEMBLY**
LENKANORDNUNG
ENSEMBLE DE DIRECTION

(30) Priority: 21.09.2017 GB 201715244
(43) Date of publication of application: 27.03.2019
(73) Proprietor: Ford Global Technologies, LLC, Dearborn, MI 48126 (US)
(72) Inventor: ROGERS, Ivan, Mark, High Wycombe, Buckinghamshire HP14 4JL (GB)
(74) Representative: Haseltine Lake Kempner LLP

(56) References cited:
- EP-A1- 2 899 095
- DE-A1- 10 248 487
- DE-A1- 10 315 385
- DE-A1- 19 824 420
- GB-A- 2 462 850
- US-A1- 2011 139 535

## Description

### Technical Field

This invention relates to the field of vehicle interiors, and particularly although not exclusively, relates to a tiltable steering wheel which has the additional function of providing a work surface for a vehicle driver.

### Background

Many tradesmen or other working individuals use vehicles such as vans as a tool of their trade to transport themselves and their equipment, or items to be delivered. Drivers of such vehicles find it necessary to perform tasks during their working day which in other work situations might be performed at a desk, such as: inputting data to a laptop, tablet, or other personal electronic device; making notes on a notepad, checklist, clipboard or the like; and reading. Often, due to constraints such as lack of time and lack of access to alternative work space, these tasks are done whilst sitting in the driving seat of the vehicle. In such circumstances there is not always a suitable space for the task being attempted, because the steering wheel occupies much of the area directly in front of the driver, preventing the driver from placing a laptop or paperwork on their lap, whilst simultaneously blocking access to, for example, another suitable surface such as the top of the dashboard. Sometimes the item being used may be rested against the steering wheel itself, but this is not ideal as the steering wheel may be too close or may be at too upright an angle to offer a suitable surface. At other times, the vehicle occupant may attempt to work by placing items on the passenger seat and leaning over, which may be problematic for health reasons, so the driver may ultimately have to leave the driving seat and perform the work elsewhere.

What is required is a solution which enables the driver of a vehicle to perform office-type tasks while remaining in the driver's seat of their vehicle.

### Statements of Invention

According to the present invention there is provided a steering assembly for a vehicle, the steering assembly comprising a steering wheel and a steering wheel support, wherein the steering wheel is connected to the steering wheel support at a sliding joint, the steering wheel being movable via the sliding joint relative to the steering wheel support between a driving orientation in which the vehicle is intended to be driven, and a work surface orientation in which the plane of a front surface of the steering wheel is more closely aligned with a longitudinal axis of the vehicle than in a driving orientation.

In the work surface orientation, an interlock may be provided to prevent the vehicle being steered.

The steering wheel support may comprise a steering column of the vehicle.

The steering wheel may be pivotably connected to the steering wheel support at a first joint, the steering wheel being moveable via the first joint relative to the steering wheel support from the driving orientation to the work surface orientation.

The steering wheel support may be pivotably connected to the vehicle at a second joint, the steering wheel support being moveable via the second joint from a driving orientation to a work surface orientation in which a steering axis of the steering wheel support is more closely aligned with the longitudinal axis of the vehicle.

The steering wheel is connected to the steering wheel support at a sliding joint, the steering wheel being moveable via the sliding joint relative to the steering wheel support from the driving orientation to the work surface orientation. One or both of the mating surfaces of the sliding joint may be arcuate.

One of the steering wheel and the steering column may comprise a slot and the other of the steering wheel and the steering column may comprise a pin which engages in the slot.

The pin may be captive in the slot.

The steering assembly may further comprise a locking element which is selectively engageable to lock the pin in the slot.

The pin may have a flat surface configured to engage a corresponding surface of the slot to prevent rotation between the pin and the slot.

The steering assembly may further comprise a mechanical, hydraulic or electrical interlock to prevent the vehicle from being driven in the work surface orientation.

A steering assembly as claimed in any preceding claim, further comprising a platform which is attachable to the steering wheel to form a work surface. Alternatively, the work surface may be formed by the steering wheel.

The platform may be attachable to the steering wheel by means of one or more fastenings which may comprise at least one of a magnet or a clip.

The steering assembly may further comprise a biasing element for biasing the steering assembly into the driving orientation or the work surface orientation The steering assembly may further comprise an actuator for moving the steering wheel between the driving orientation and the work surface orientation.

There may be a plurality of driving orientations and/or a plurality of work surface orientations, but in all work surface orientations the plane of a front surface of the steering wheel is more closely aligned with the longitudinal axis of the vehicle (eg closer to parallel with the longitudinal axis) than in all driving orientations.

A motor vehicle may comprise the above mention steering wheel assembly.

### Brief Description of the Drawings

For a better understanding of the present disclosure, and to show more clearly how it may be carried into effect, reference will now be made, by way of example, to the accompanying drawings, in which:
Figure 1 is a schematic side view of an example of a steering assembly, which is useful for understanding features of the invention, in a driving orientation;
Figure 2 is a schematic side view of the steering assembly shown in Figure 1, in a work surface orientation;
Figure 3 is a schematic side view of a sliding joint for the steering assembly in a driving orientation;
Figure 4 is a schematic side view of the sliding joint in a work surface orientation;
Figures 5a and 5b are front and rear views respectively of a steering wheel for the steering assembly depicted in Figures 1 to 4;
Figure 6a is a schematic side view of an articulation member for the steering wheel assembly;
Figure 6b is a schematic view of the articulation member normal to a sliding surface of the articulation member;
Figure 7 is a schematic side view depicting a working platform coupled to the steering wheel;
Figure 8 is a perspective view of the working platform; and
Figure 9 is a front view of a steering wheel for the steering assembly having an integrated working surface.

### Detailed Description

The steering wheel of many vehicles is positioned in a vertical, near-vertical or essentially upright position. In arrangements of the present disclose, the steering wheel of the vehicle is able to move from this "driving" orientation to a "work surface" orientation in which it is horizontal, or near-horizontal and is able to function as an effective work surface.

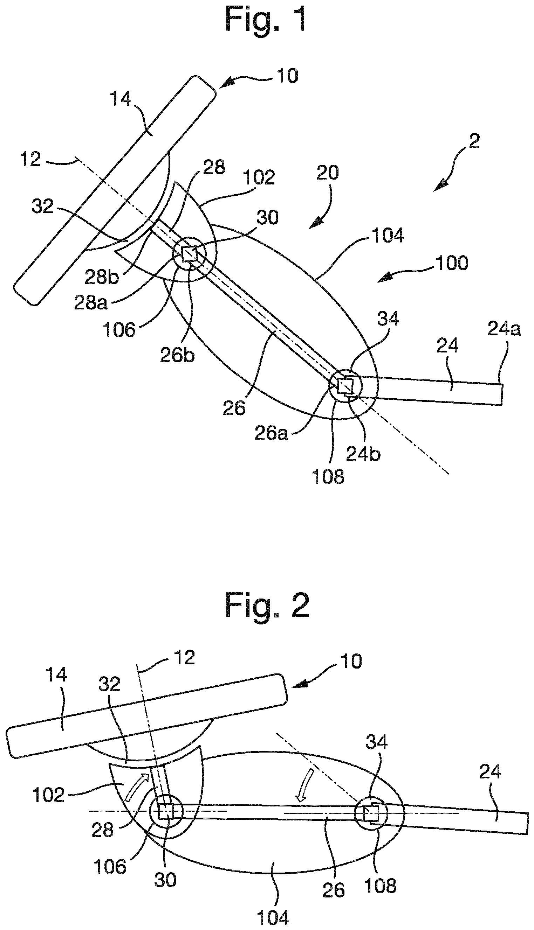

With reference to Figures 1 and 2, an example of a steering wheel assembly 2, which is helpful for understanding features of the invention, comprises a steering wheel 10 and a steering wheel support 100.

The steering wheel support 100 comprises a steering column 20 comprising a steering member 24, a first articulation member 28, and a second articulation member 26. The steering wheel support 100 further comprises a first housing 102 configured to house the first articulation member 28 and a second housing 104 configured to house the second articulation member 26. The first and second housings, 102, 104 are together configured to support the steering wheel 10.

The steering member 24 may be coupled to a steering assembly (not shown) at a first end 24a of the steering member. The steering assembly may be configured steer, e.g. adjust a direction of travel of the vehicle, in response to rotations of the steering member 24.

In some arrangements, rotations of the steering member 24 may drive, e.g. directly drive, the steering assembly to steer the vehicle. For example, the steering assembly may comprise a steering rack and the steering member 24 may turn a pinion gear for adjusting the position of the steering rack to steer the vehicle. Alternatively, rotations of the steering member 24 may be measured by the steering assembly and used to generate control signals for controlling the steering operation of the vehicle.

The steering wheel 10 is coupled to the second articulation member 28 of the steering column 20 at a first end 28b of the first articulation member via a first joint 32. The first joint 32 is configured to transmit rotations of the steering wheel, about a central axis 12 of the steering wheel, to the steering column 20. As described below, the steering column 20 is configured to transmit the rotations of the steering wheel to the steering member 24 to enable a driver of the vehicle to adjust the direction of travel of the vehicle by turning the steering wheel 10.

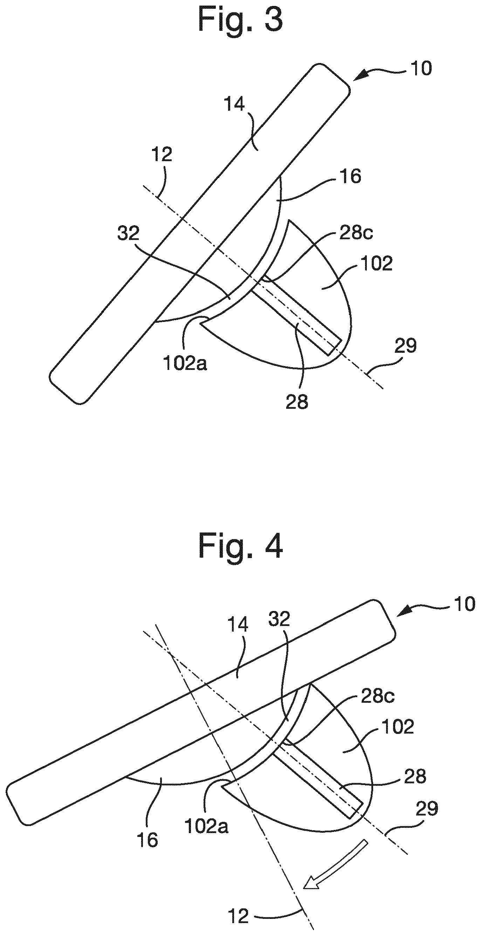

In the example shown in Figures 1 and 2, the first joint 32 is configured to movably couple the steering wheel 10 to the first articulation member 28. As depicted in Figures 1 and 2, the first joint 32 enables the steering wheel 10 to pivot, relative to the first articulation member 28, e.g. in a direction perpendicular to the central axis 12 of the steering wheel 10. However, as described below with reference to Figures 3 and 4, in steering assemblies according to arrangements of the present disclosure, the first joint 32 is configured such that the steering wheel 10 is slideable relative to the first articulation member 28.

The first joint 32 may be configured such that the transmission of rotations of the steering wheel to the steering column 20, e.g. the first articulation member, is unaffected by movement of the steering wheel 10 relative to the first articulation member 28. However, in some arrangements, rotations may not be transmitted by the first joint 32 when the steering wheel has been moved out of the driving orientation.

The steering wheel support 100 enables the steering wheel 10 to be moved from a driving orientation, as depicted in Figure 1, to a work surface orientation, as depicted in Figure 2. In the work surface orientation, a plane of a front face 14 of the steering wheel may be more closely aligned with a longitudinal axis of the vehicle, compared to when the steering wheel is in the driving orientation.

With reference to Figures 1 and 2, a first end 28a of the first articulation member is coupled, e.g. pivotably coupled, to a first end 26b of the second articulation member 26. A second coupling 30 is provided to couple the first articulation member 28 to the second articulation member 26. The second coupling 30 is configured to enable the steering column 20 to move between the driving orientation, as depicted in Figure 1, and the work surface orientation, as depicted in Figure 2.

The second coupling 30 may be configured such that the transmission of rotation from the first articulation member 28 to the second articulation member 26 is substantially unaffected by pivoting of the first articulation member 28 relative to the second articulation member 26. For example, the second coupling 30 may comprise a universal joint, such as a cardon joint, or any other structure configured to transmit rotation between two shafts inclined at an angle to one another. The second coupling 30 may define a pivot axis, the first articulation member 28 being pivotable relative to the second articulation member 26 about the pivot axis. The pivot axis may extend in a lateral direction of the motor vehicle. In other arrangements, the second coupling 30 may be configured to permit pivoting of the first articulation member 28 relative to the second articulation member 26 about more than one axis.

The first housing 102 may be pivotally coupled to the second housing 104 at a second joint 106. A pivot axis of the second joint 106 may be aligned, e.g. coaxially, with the pivot axis of the second coupling 30. In this way, the first and second housings 102, 104 of the steering wheel support 100 can move together with the first and second articulation members when the steering wheel 10 is moved between the driving orientation and the work surface orientation.

The steering member 24 is coupled, e.g. pivotably coupled, to the second articulation member 26 via a third coupling 34. In particular, a second end 24b of the steering member 24 is coupled to a first end 26a of the second articulation member 26.

The third coupling 34 may be configured in a similar way to the second coupling 30 described above. In particular, the third coupling 34 may be configured to transmit rotations between the second articulation members 26 and the steering member 24 and facilitate pivoting of the second articulation member 26 relative to the steering member about one or more pivot axes.

The second housing 104 may be pivotably coupled to the vehicle, e.g. to a dash panel or other trim portion of the vehicle, at a third joint 108. A pivot axis of the third joint 108 may be aligned, e.g. coaxial, with the pivot axis of the third coupling. In this way, the second housing may pivot relative to the vehicle, as depicted in Figure 2, when the steering wheel 10 moves between the driving orientation and the work surface orientation.

The first and second articulation members 28, 26 and the first and second housings 102, 104 may be configured to be moved relative to one another and the steering member 24 manually by a driver of the vehicle, in order to move the steering wheel 10 between the driving orientation and the work surface orientation. The steering wheel support 100 may comprise locking mechanisms (not shown), such as lever adjustable clamping assemblies, ratchets or any other suitable locking mechanisms, configured to hold the first and second housings 102, 104 in a position selected by the driver. For example, by restricting movement of the second and third joints 106, 108.

In some arrangements, the steering wheel support 100 may comprise one or more biasing elements configured to bias the first and second housings 102, 104 into the driving orientation or the work surface orientation.

In some arrangements, the steering wheel support 100 may comprise one or more actuators, such as servo motors, or hydraulic or pneumatic actuators, configured to control the movement of the first and second housings, e.g. between the driving and work surface orientations or the steering wheel 10. The actuators may be controlled by the driver using one or more buttons, switches or other control inputs provided on the vehicle, in order to position the steering wheel in a desirable position. Alternatively, the operation of the actuators may be controlled by a controller of the vehicle, such as an Electronic Control Unit (ECU), Body Control Unit (BCU) or other vehicle controller to move the steering column 20 between orientations.

With reference to Figures 3 and 4, the first joint 32 is configured such that the steering wheel 10 is slideable relative to the first articulation member 28 and the first housing 102 when moving between the driving orientation and the work surface orientation. The first articulation member 28, the first housing 102 and/or the steering wheel 10 may define respective arcuate surfaces 28c, 102a, 16. The arcuate surface 16 of the steering wheel 10 may slide against the arcuate surfaces of the first articulation member 28 and/or first housing 104 as the steering wheel 10 moves. The steering wheel 10 may tilt or pivot as is slides relative to the first articulation member 28 and/or the first housing. This may allow the plane of a front face 14 of the steering wheel 10 to more closely align with a longitudinal axis of the vehicle when moving into the work surface orientation.

As depicted in Figure 3, when the steering wheel 10 is in the driving orientation, the main axis 12 of the steering wheel 10 may be substantially aligned with a main axis 29 of the first articulation member 28. In contrast, as depicted in Figure 4, when the steering wheel 10 is in the work surface orientation, the main axis 12 of the steering wheel may be more closely aligned with a vertical axis of the vehicle, e.g. compared to the main axis 29 of the first articulation member 28, e.g. about which the first articulation member rotates.

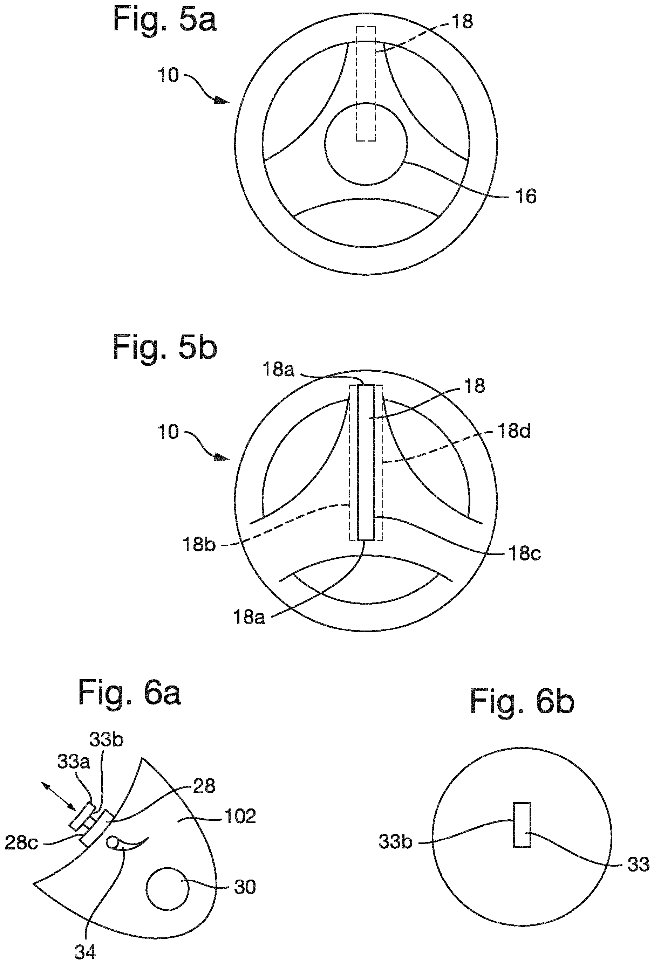

With reference to Figures 5a, 5b, 6a and 6b, the first joint 32, may comprise a pin 33, which extends from the first articulation member 28 into a slot or groove 18 defined in the steering wheel 10. As the steering wheel 10 slides, relative to the first articulation member 28, the pin 33 may run within the slot 18. Ends 18a of the slot 18 thereby define limits on the extent of movement between the steering wheel 10 and the first articulation member 28.

The pin 33 may comprise a head portion 33a provided at a distal end of the pin having a greater width than a neck portion 33b of the pin 33 at a proximal end of the pin. In a similar way, the slot 18 formed in the steering wheel may have a recess portion 18b forming a base of the slot 18. The recess portion may have a greater width than an opening 18c of the slot 18. A shoulder may be formed between the recess portion and the opening of the slot 18. When the steering wheel is coupled to the steering column, the head portion 33a of the pin 33 may be received within the recess portion 18b of the slot 18.

The steering column 20 further comprises a locking element 34 configured to selectively restrict movement of the steering wheel 10 relative to the first articulation member 28. The locking element 34 may be configured to selectively extend and retract the pin 33 relative to the first articulation member 28. When the pin is retracted, the head 33a of the pin acts against the shoulder of the slot 18 to clamp the steering wheel 10 against the first articulation member 28 and restrict movement of the steering wheel relative to first articulation member 28, e.g. due to friction between the arcuate surfaces 28c, 16.

When the pin 33 is extended, a clearance may be formed between the pin 33 and the shoulder which enables the steering wheel 10 to move, e.g. slide, relative to the first articulation member 28.

The pin 33 comprises a side wall 33b having a flat face, which engages a corresponding face on a side wall 18d of the slot 18 and restricts rotation of the steering wheel 10 relative to the first articulation member 28 at the first joint 32. The side wall 33b of the pin may engage the side wall 18d of the slot regardless of whether the pin is extended or retracted.

In other arrangements, the pin 33 may be provided on the steering wheel 10 and the slot 18 may be provided on the first articulation member 28.

The steering wheel 10 may be configured to be moved manually by the driver. Alternatively, the steering wheel support 100 may comprise one or more actuators configured to control the movement of the steering wheel 10 relative to the first articulation member 28. In such arrangements, the position of the steering wheel may be held relative to the first articulation member by virtue of the operation of the actuator.

Although in the arrangement described above, the steering wheel support 100 comprises a steering column extending through the first and second housings 102, 104 to the steering member 24, in other arrangements, the steering assembly may operate using a drive-by-wire control system. In this case, the first and second articulation members 26, 28 may not be provided, and rotation of the steering wheel 10 may be determined using a rotation sensor provided on the first housing.

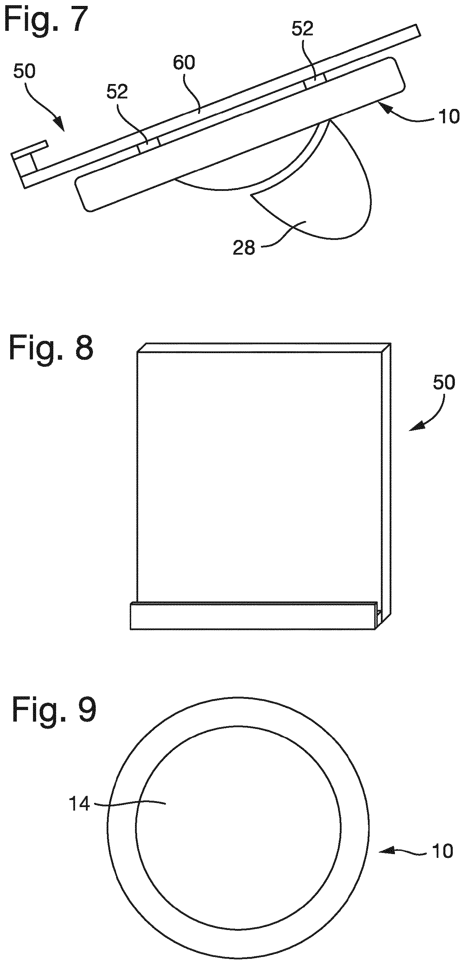

With reference to Figure 9, in some arrangements, the front surface 14 of the steering wheel 10 may itself form the work surface. For example the front surface 14 may be suitably flat and firm to provide a surface for writing on. Alternatively, with reference to Figures 7 and 8, the steering wheel 10 may function as a support for a separate platform 50 which can be coupled to and/or supported by the steering wheel and provide a work surface 60.

The platform 50 may comprise one or more attachments 52 configured to couple the platform to the steering wheel 10. In some arrangements, the attachments 52 may comprises magnets configured to couple to the steering wheel 10 magnetically. Alternatively, the attachments 52 may comprise clips, suction cups or any other suitable structures capable of detachably coupling the platform 50 to the steering wheel 10. The steering wheel 10 may comprises one or more corresponding attachment points for coupling to or supporting the platform attachments 52.

The platform 50 may comprise one or more further attachments which rest on, anchor to or engage points on other surfaces of the vehicle, such as a steering member, dashboard, central column, or door panel to provide additional stability to the work surface 50.

It may be undesirable for the vehicle to be operated when the steering wheel 10 is arranged in the work surface orientation. Similarly, it may be undesirable for the steering wheel 10 to be moved into the work surface orientation when the vehicle is operating.

The vehicle may comprise an interlock device (not shown) configured to prevent the vehicle form being operated whilst the steering wheel is in the work surface orientation. For example, the interlock may determine when the steering wheel is in the work surface orientation and may prevent an engine or other drive system of the vehicle from being started or operated.

Similarly, when the vehicle is being operated, the interlock may prevent the steering wheel support 100 from being moved. For example, the interlock may prevent actuators within the steering wheel support 100 from operating to adjust the position of the steering wheel and/or may prevent locking mechanisms provided at joints 102, 104 of the steering wheel support 100 from allowing movements at the joints.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A steering assembly (2) for a vehicle, the steering assembly comprising a steering wheel (10) and a steering wheel support (100), wherein the steering wheel is slideably connected to the steering wheel support at a first, sliding joint, **characterised in that**, at said first joint (32), the steering wheel (10), relative to the steering wheel support (100), is slideably movable between a driving orientation in which the vehicle is intended to be driven, and a work surface orientation in which the plane of a front surface of the steering wheel is more closely aligned with a longitudinal axis of the vehicle than in a driving orientation.

2. A steering assembly (2) as claimed in claim 1, wherein the steering wheel support (100) comprises a steering column (20) of the vehicle.

3. A steering assembly (2) as claimed in any of the preceding claims, wherein the steering wheel support (100) is pivotably connected to the vehicle at a second joint (106), the steering wheel support being moveable via the second joint from the driving orientation to the work surface orientation.

4. A steering assembly (2) as claimed in claim 2, wherein one of the steering wheel (10) and the steering column (20) comprises a slot (18) and the other of the steering wheel and the steering column comprises a pin (33) which engages in the slot.

5. A steering assembly (2) as claimed in claim 4, wherein the pin (33) is captive in the slot (18).

6. A steering assembly (2) as claimed in claim 4 or 5, further comprising a locking element which is selectively engageable to lock the pin (33) in the slot (18).

7. A steering assembly (2) as claimed in any of claims 4 to 6, wherein the pin (33) comprises a flat surface configured to engage a corresponding surface of the slot (18) to prevent relative rotation between the pin and the slot.

8. A steering assembly (2) as claimed in any preceding claim, further comprising an interlock to prevent the vehicle from being driven in the work surface orientation.

9. A steering assembly (2) as claimed in any preceding claim, further comprising a platform (50) which is attachable to the steering wheel (10) to form the work surface (60).

10. A steering assembly (2) as claimed in claim 9, wherein the platform (50) is attachable to the steering wheel (10) by means of one or more magnets.

11. A steering assembly (2) as claimed in any preceding claim, further comprising a biasing element for biasing the steering assembly into the driving orientation or the work surface orientation.

12. A steering assembly (2) as claimed in any preceding claim, further comprising an actuator for moving the steering wheel (10) between the driving orientation and the work surface orientation.

13. A steering assembly (2) as claimed in any of claims 1 to 8, wherein the work surface (60) is formed at least in part by the steering wheel (10).

## Patentansprüche

1. Lenkungsanordnung (2) für ein Fahrzeug, wobei die Lenkungsanordnung ein Lenkrad (10) und einen Lenkradträger (100) umfasst, wobei das Lenkrad an einem ersten Gleitgelenk gleitbar mit dem Lenkradträger verbunden ist, **dadurch gekennzeichnet, dass** das Lenkrad (10) zwischen einer Fahrorientierung, in der das Fahrzeug gefahren werden soll, und einer Arbeitsflächenorientierung, in der die Ebene einer vorderen Fläche des Lenkrads näher auf eine Längsachse des Fahrzeugs ausgerichtet ist als in einer Fahrorientierung, am ersten Gelenk (32) relativ zum Lenkradträger (100) gleitbar bewegbar ist.

2. Lenkungsanordnung (2) nach Anspruch 1, wobei der Lenkradträger (100) eine Lenksäule (20) des Fahrzeugs umfasst.

3. Lenkungsanordnung (2) nach einem der vorhergehenden Ansprüche, wobei der Lenkradträger (100) an einem zweiten Gelenk (106) schwenkbar mit dem Fahrzeug verbunden ist, wobei der Lenkradträger via das zweite Gelenk aus der Fahrorientierung in die Arbeitsflächenorientierung bewegbar ist.

4. Lenkungsanordnung (2) nach Anspruch 2, wobei eines des Lenkrads (10) und der Lenksäule (20) einen Schlitz (18) und das andere des Lenkrads und der Lenksäule einen Stift (33) umfasst, der in den Schlitz einrückt.

5. Lenkungsanordnung (2) nach Anspruch 4, wobei der Stift (33) im Schlitz (18) unverlierbar ist.

6. Lenkungsanordnung (2) nach Anspruch 4 oder 5, die ferner ein Verriegelungselement umfasst, das selektiv einrückbar ist, um den Stift (33) im Schlitz (18) zu verriegeln.

7. Lenkungsanordnung (2) nach einem der Ansprüche 4 bis 6, wobei der Stift (33) eine ebene Fläche umfasst, die dazu ausgelegt ist, auf eine entsprechende Fläche des Schlitzes (18) einzurücken, um eine relative Drehung zwischen dem Stift und dem Schlitz zu verhindern.

8. Lenkungsanordnung (2) nach einem der vorhergehenden Ansprüche, die ferner eine Arretierung umfasst, um zu verhindern, dass das Fahrzeug in der Arbeitsflächenorientierung gefahren wird.

9. Lenkungsanordnung (2) nach einem der vorhergehenden Ansprüche, die ferner eine Plattform (50) umfasst, die am Lenkrad (10) befestigbar ist, um die Arbeitsfläche (60) zu bilden.

10. Lenkungsanordnung (2) nach Anspruch 9, wobei die Plattform (50) mit einem oder mehreren Magneten am Lenkrad (10) befestigbar ist.

11. Lenkungsanordnung (2) nach einem der vorhergehenden Ansprüche, die ferner ein Vorspannelement zum Vorspannen der Lenkungsanordnung in die Fahrorientierung oder die Arbeitsflächenorientierung umfasst.

12. Lenkungsanordnung (2) nach einem der vorhergehenden Ansprüche, die ferner einen Aktuator zum Bewegen des Lenkrads (10) zwischen der Fahrorientierung und der Arbeitsflächenorientierung umfasst.

13. Lenkungsanordnung (2) nach einem der Ansprüche 1 bis 8, wobei die Arbeitsfläche (60) mindestens teilweise durch das Lenkrad (10) gebildet wird.

## Revendications

1. Un ensemble de direction (2) pour un véhicule, l'ensemble de direction comprenant un volant de direction (10) et un support de volant de direction (100), dans lequel le volant de direction est relié de manière coulissante au support de volant de direction au niveau d'une première jointure coulissante, **caractérisé en ce que**, au niveau de ladite première jointure (32), le volant de direction (10), par rapport au support de volant de direction (100), est déplaçable de manière coulissante entre une orientation de conduite dans laquelle le véhicule est censé être conduit et une orientation de surface de travail dans laquelle le plan d'une surface avant du volant de direction est plus étroitement aligné avec l'axe longitudinal du véhicule que dans une orientation de conduite.

2. Un ensemble de direction (2) selon la revendication 1, dans lequel le support de volant de direction (100) comprend une colonne de direction (20) du véhicule.

3. Un ensemble de direction (2) selon l'une quelconque des revendications précédentes, dans lequel le support de volant de direction (100) est relié de manière pivotante au véhicule au niveau d'une deuxième jointure (106), le support de volant de direction étant déplaçable via la deuxième jointure de l'orientation de conduite à l'orientation de surface de travail.

4. Un ensemble de direction (2) selon la revendication 2, dans lequel l'un du volant de direction (10) et de la colonne de direction (20) comprend une fente (18) et l'autre du volant de direction et la colonne de direction comprend une broche (33) qui s'embraye dans la fente.

5. Un ensemble de direction (2) selon la revendication 4, dans lequel la broche (33) est captive dans la fente (18).

6. Un ensemble de direction (2) selon la revendication 4 ou 5, comprenant en outre un élément de verrouillage qui peut être sélectivement embrayé pour verrouiller la broche (33) dans la fente (18).

7. Un ensemble de direction (2) selon l'une quelconque des revendications 4 à 6, dans lequel la broche (33) comprend une surface plane configurée pour embrayer une surface correspondante de la fente (18) pour empêcher une rotation relative entre la broche et la fente.

8. Un ensemble de direction (2) selon l'une quelconque des revendications précédentes, comprenant en outre un verrouillage pour empêcher le véhicule d'être conduit dans l'orientation de la surface de travail.

9. Un ensemble de direction (2) selon l'une quelconque des revendications précédentes, comprenant en outre une plateforme (50) qui peut être fixée au volant de direction (10) pour former la surface de travail (60).

10. Un ensemble de direction (2) selon la revendication 9, dans lequel la plateforme (50) peut être fixée au volant de direction (10) au moyen d'un ou plusieurs aimants.

11. Un ensemble de direction (2) selon l'une quelconque des revendications précédentes, comprenant en outre un élément de sollicitation pour solliciter l'ensemble de direction dans l'orientation de conduite ou l'orientation de surface de travail.

12. Un ensemble de direction (2) selon l'une quelconque des revendications précédentes, comprenant en outre un actionneur pour déplacer le volant de direction (10) entre l'orientation de conduite et l'orientation de surface de travail.

13. Un ensemble de direction (2) selon l'une quelconque des revendications 1 à 8, dans lequel la surface de travail (60) est formée au moins en partie par le volant de direction (10).
